# EUROPEAN PATENT APPLICATION

(11) **EP 4 607 402 A1**
(43) Date of publication of application: **27.08.2025**
(21) Application number: 23900879.0
(22) Date of filing: 19.10.2023
(51) Int. Cl.: G06F 40/166, G06F 40/103, G06F 40/151

(54) **AUTOMATIC DOCUMENT CONVERSION AND EDITING PROGRAM**

(30) Priority: 05.12.2022 KR 20220167427
(71) Applicant: Kim, Ju Myoung, Yongin-si Gyeonggi-do 16805 (KR)
(72) Inventor: Kim, Ju Myoung, Yongin-si Gyeonggi-do 16805 (KR)
(74) Representative: Valet Patent Services Limited
(86) International application number: PCT/KR2023/016226
(87) International publication number: WO 2024/122858

(57) **Abstract**

An automatic document conversion and editing program comprises the steps of: providing a first form document having a plurality of writing areas for automatic document conversion; creating a pre-conversion document for automatic document conversion through a user entering input into the plurality of writing areas in the first form document; extracting a plurality of pieces of content including characters and pictures entered in the plurality of writing areas from the created pre-conversion document; causing each of the extracted plurality of pieces of content to correspond to a plurality of form documents including a second form document and a third form document having a plurality of conversion areas provided in correspondence with the plurality of writing areas; and creating a post-conversion document corresponding to the plurality of form documents by placing each of the extracted plurality of pieces of content into the corresponding conversion areas.

## Description

### [TECHNICAL FIELD]

The present invention relates to an automatic document conversion and editing program and more particularly, to an automatic document conversion and editing program that can create one document and convert it into at least one other form document.

### [BACKGROUND ART]

Generally, documents such as proposals are created using PowerPoint, and when the volume of documents to be created is large, a plurality of workers divide them and work cooperatively. Common problems that occur when the plurality of workers work cooperatively include reduction of productivity due to the business distribution and collection between workers, lack of consistency of the created documents, and inconsistencies in data within the documents.

However, since this method requires the use of a separate program, it is not easy to modify and manage data contained in PowerPoint, or to utilize data in the formats such as database or Excel, which are frequently used in business for creating documents. In addition, there is a problem that it is difficult to convert one form document into a plurality of form documents for a plurality of submission destinations.

### [DETAILED DESCRIPTION OF THE INVENTION]

### [Technical Problem]

Therefore, it is an object of the present invention to provide an automatic document conversion and editing program that can create one document and convert it into a plurality of form documents.

### [Technical Solution]

In order to achieve the above object, the present invention provides an automatic document conversion and editing program comprising the steps of: providing a first form document having a plurality of writing areas for automatic document conversion; creating a pre-conversion document for automatic document conversion through a user entering input into the plurality of writing areas in the first form document; extracting a plurality of pieces of content including characters and pictures entered in the plurality of writing areas from the created pre-conversion document; causing each of the extracted plurality of pieces of content to correspond to a plurality of form documents including a second form document and a third form document having a plurality of conversion areas provided in correspondence with the plurality of writing areas; and creating a post-conversion document corresponding to the plurality of form documents by placing each of the extracted plurality of pieces of content into the corresponding conversion areas. When users write their desired content in a plurality of writing areas of the first form document, the second form document and the third form document can be automatically created, so that the users can utilize the first form document that they frequently use, which makes it easy to create documents of various forms.

Wherein, some embodiment of the invention further comprises a step of grasping the plurality of writing areas in a fourth form document including the plurality of pieces of content; a step of extracting the plurality of pieces of content entered in the plurality of writing areas of the grasped fourth form document; and a step of creating a pre-conversion document by placing each of the extracted plurality of pieces of content into the corresponding writing areas of the first form document. In this case, an advantage is that a fourth form document can be converted into a first form document, enabling the conversion of the first form document into a second form document and a third form document.

Further, the step of extracting the plurality of pieces of content comprises a step of identifying the table of contents of the second form document in the first form document. In this case, an advantage is that the table of contents can be extracted from the first form document and used as the table of contents of the second form document.

Wherein, some embodiment of the invention further comprises a step of editing and saving the second form document corresponding to the first form document. In this case, an advantage is that the writing area of the first form document and the conversion area of the second form document are modified, edited, and saved, so that they can be written in correspondence to a new form.

In addition, some embodiment of the invention comprises displaying the corresponding contents in the conversion area where the extracted plurality of pieces of content are not placed among the corresponding conversion areas after the step of creating a pre-conversion document, and manually entering the corresponding contents into the conversion area where the extracted of pieces of content are not placed. In this case, since there may be some content that has not been converted, it is possible to inform the user of this and allow the content to be manually entered, which is preferable.

### [Advantageous Effects]

According to the present invention, when a user creates the desired content in a plurality of writing areas of a first form document, the second form document and the third form document can be automatically created, so that the users can utilize the first form document that they frequently use, which makes it easy to create documents of various forms.

Also, in order to convert a first form document into a second form document and a third form document, the fourth form document can be converted into a first form document, and the table of contents from the first form document can be extracted and created as the table of contents of the second form document.

In addition, the writing area of the first form document and the conversion area of the second form document are modified, edited, and saved, which makes it easy to create in correspondence to a new form. Furthermore, since there may be content that has not been converted, it is possible to inform the user of this and allow the content to be manually entered, thereby ensuring that the conversion is completed without any missing parts and improving the stability of the conversion.

### [BRIEF DESCRIPTION OF THE DRAWINGS]

FIG. 1 is a flow chart of an automatic document conversion and editing program according to the present invention.
FIG. 2 is a flow chart of another automatic document conversion and editing program.
FIG. 3 is a flow chart of yet another automatic document conversion and editing program.
FIG. 4 is an example diagram illustrating the overall flow for explaining a method of creating a PowerPoint document using Excel data.
FIG. 5 is an example diagram illustrating the overall flow for explaining a method of creating a Word document using Excel data.
FIG. 6 is an example diagram illustrating the creation of Excel data.
FIG. 7 is an example flow chart illustrating a method of generating table of contents structure data to be used in a PowerPoint or Word document based on a table of contents organized in Excel.
FIG. 8 is an example diagram of a PowerPoint template generated using the table of contents data created through the process of FIG. 7.
FIG. 9 is an example diagram of a Word template generated using the table of contents data created through the process of FIG. 7.
FIG. 10 is an example diagram of code that generates table of contents structure data to be used in a PowerPoint or Word document based on the table of contents organized in the Excel data of FIG. 6.
FIG. 11 is an example diagram illustrating the flow of transferring contents written by the user in the PowerPoint document of FIG. 4 into the Word document of FIG. 5 based on the table of contents organized in the Excel data of FIG. 6.

### [DETAILED DESCRIPTION OF THE EMBODIMENTS]

An automatic document conversion and editing program according to preferable embodiments of the present invention comprises a step of providing a first form document having a plurality of writing areas for automatic document conversion; a step of creating a pre-conversion document for automatic document conversion through a user entering input into the plurality of writing areas in the first form document; a step of extracting a plurality of pieces of content including characters and pictures entered in the plurality of writing areas from the created pre-conversion document; a step of causing each of the extracted plurality of pieces of content to correspond to a plurality of form documents including a second form document and a third form document having a plurality of conversion areas provided in correspondence with the plurality of writing areas; and a step of creating a post-conversion document corresponding to the plurality of form documents by placing each of the extracted plurality of pieces of content into the corresponding conversion areas.

Hereinafter, an automatic document conversion and editing program according to specific embodiments of the present invention is described in detail with reference to the accompanying drawings.

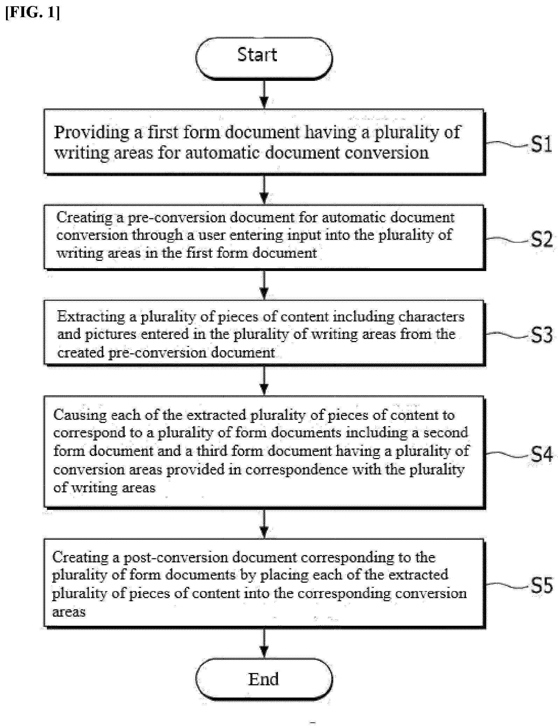

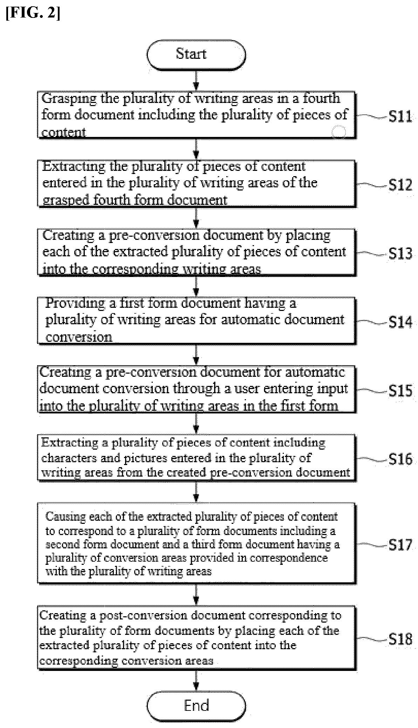

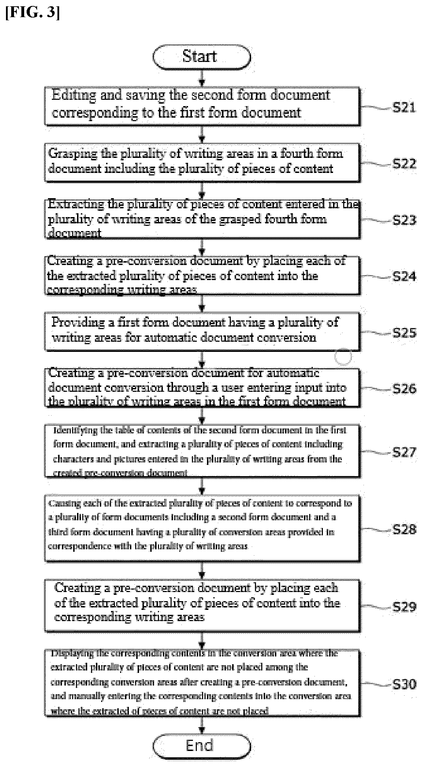

FIG. 1 is a flow chart of an automatic document conversion and editing program according to the present invention. FIG. 2 is a flow chart of another automatic document conversion and editing program. FIG. 3 is a flow chart of yet another automatic document conversion and editing program.

The automatic document conversion and editing program is described with reference to FIGS. 1 to 4.

FIG. 1 is a flow chart of an automatic document conversion and editing program according to the present invention.

One embodiment of the invention comprises providing a first form document having a plurality of writing areas for automatic document conversion (S1).

One embodiment of the invention comprises creating a pre-conversion document for automatic document conversion through a user entering input into the plurality of writing areas in the first form document (S2).

One embodiment of the invention comprises extracting a plurality of pieces of content including characters and pictures entered in the plurality of writing areas from the created pre-conversion document (S3).

One embodiment of the invention comprises causing each of the extracted plurality of pieces of content to correspond to a plurality of form documents including a second form document and a third form document having a plurality of conversion areas provided in correspondence with the plurality of writing areas (S4).

One embodiment of the invention comprises creating a post-conversion document corresponding to the plurality of form documents by placing each of the extracted plurality of pieces of content into the corresponding conversion areas (S5).

FIG. 2 is a flow chart of another automatic document conversion and editing program.

One embodiment of the invention comprises grasping the plurality of writing areas in a third form document including the plurality of pieces of content (S11).

One embodiment of the invention comprises extracting the plurality of pieces of content entered in the plurality of writing areas of the grasped third form document (S12).

One embodiment of the invention comprises creating a pre-conversion document by placing each of the extracted plurality of pieces of content into the corresponding writing areas (S13).

One embodiment of the invention comprises providing a first form document having a plurality of writing areas for automatic document conversion (S14).

One embodiment of the invention comprises creating a pre-conversion document for automatic document conversion through a user entering input into the plurality of writing areas in the first form document (S15).

One embodiment of the invention comprises extracting a plurality of pieces of content including characters and pictures entered in the plurality of writing areas from the created pre-conversion document (S16).

One embodiment of the invention comprises causing each of the extracted plurality of pieces of content to correspond to a plurality of form documents including a second form document and a third form document having a plurality of conversion areas provided in correspondence with the plurality of writing areas (S17).

One embodiment of the invention comprises creating a post-conversion document corresponding to the plurality of form documents by placing each of the extracted plurality of pieces of content into the corresponding conversion areas (S18).

FIG. 3 is a flow chart of yet another automatic document conversion and editing program.

One embodiment of the invention comprises a step of editing and saving the second form document corresponding to the first form document (S21).

One embodiment of the invention comprises grasping the plurality of writing areas in a third form document including the plurality of pieces of content (S22).

One embodiment of the invention comprises extracting the plurality of pieces of content entered in the plurality of writing areas of the grasped third form document (S23).

One embodiment of the invention comprises creating a pre-conversion document by placing each of the extracted plurality of pieces of content into the corresponding writing areas of the first form document (S24).

One embodiment of the invention comprises providing a first form document having a plurality of writing areas for automatic document conversion (S25).

One embodiment of the invention comprises creating a pre-conversion document for automatic document conversion through a user entering input into the plurality of writing areas in the first form document (S26).

One embodiment of the invention comprises identifying the table of contents of the second form document in the first form document, and extracting a plurality of pieces of content including characters and pictures entered in the plurality of writing areas from the created pre-conversion document (S27).

One embodiment of the invention comprises causing each of the extracted plurality of pieces of content to correspond to a plurality of form documents including a second form document and a third form document having a plurality of conversion areas provided in correspondence with the plurality of writing areas (S28).

One embodiment of the invention comprises creating a post-conversion document by placing each of the extracted plurality of pieces of content into the corresponding writing areas (S29).

One embodiment of the invention comprises displaying the corresponding contents in the conversion area where the plurality of pieces of extracted content are not placed among the corresponding conversion areas after the step of creating the post-conversion document, and manually entering the corresponding contents into the conversion area where the plurality of pieces of extracted content are not placed (S30).

Here, some embodiments that can actually be utilized are described.

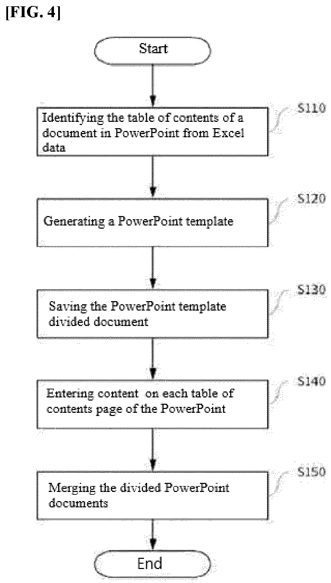

FIG. 4 is an example diagram illustrating the overall flow for explaining a method of creating a PowerPoint document using Excel data.

The present method comprises identifying the table of contents of a document to be created in PowerPoint from Excel data (S110), generating a PowerPoint template (S120), dividing and saving the PowerPoint template by creators (S130), entering content into objects on the pages corresponding to each item in the table of contents of the PowerPoint (S140), and merging the divided PowerPoint documents (S150). The function caused by such a flow can be realized using a scripting language such as Visual Basic or Python that supports the Visual Basic library, which is supported in Microsoft's PowerPoint or Excel.

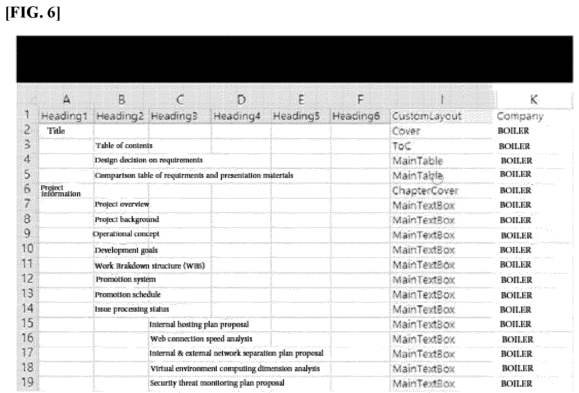

FIG. 6 is an example diagram illustrating the creation of Excel data.

The Excel data can be composed of information such as the hierarchical table of contents and number (210) of the PowerPoint document to be created, the layout to be used (220), and the name of the worker (230). The hierarchy of the document's table of contents is distinguished by column numbers (210), and the hierarchical numbers are automatically recognized and assigned to each item in the table of contents by the program. A feature of the present invention is that users can directly use Excel, which is a tool that facilitates editing of data used in document creation, without need for a separate tool to manage the table of contents or the data associated with each entry. This feature provides the advantage that data managed in Excel can be directly utilized in documents.

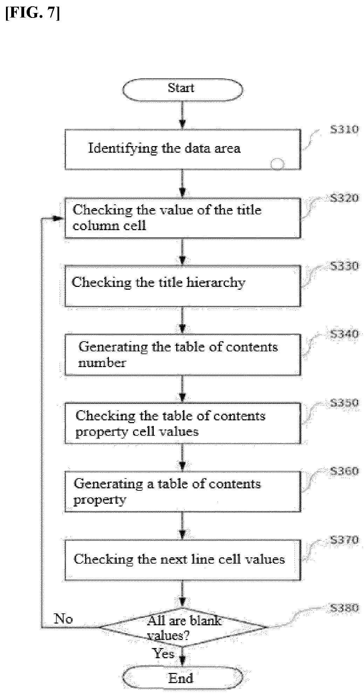

FIG. 7 is an example flow chart illustrating a method of generating table of contents structure data to be used in a PowerPoint or Word document based on a table of contents organized in Excel.

One embodiment of the invention comprises identifying the data area of the Excel sheet (S310); checking the value of the title column cell (S320); checking the title hierarchy (210) (S330); generating the table of contents number (S340); checking the property cell values for the table of contents (220, 230) (S350); generating a table of contents property (S360); checking the cell values of the next line (S370), and if all values are blank, terminating the process, or otherwise, checking the value of the title column cell of the next column (S320).

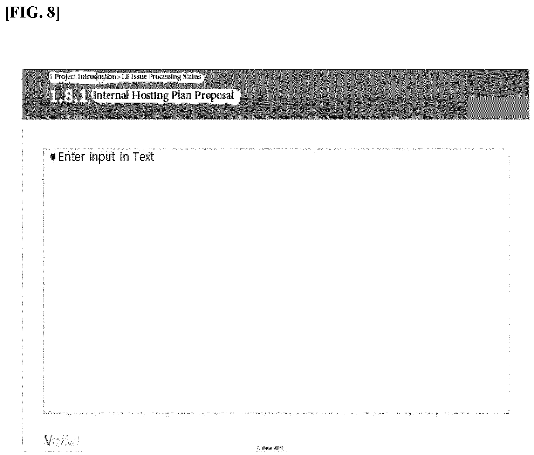

FIG. 8 is an example diagram of a PowerPoint template generated (S120) using the table of contents data created through the process of FIG. 7.

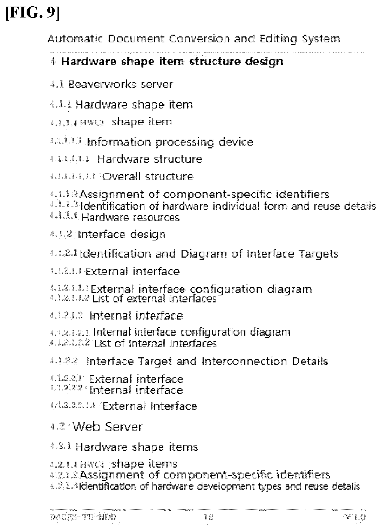

FIG. 9 is an example diagram of a Word template generated (S120) using the table of contents data created through the process of FIG. 7.

The table of contents structure data generated through the process of FIG. 7 is applied equally to the PowerPoint template (FIG. 8) and the Word template (FIG. 9), so that each item in the table of contents can be identified. Therefore, the content entered by the user into the PowerPoint template can be transferred to the Word template using an automated program. A feature of the present invention is that it enables a user to automatically generate a Word document by using the data originally used to create a PowerPoint document, thereby allowing the generation of a large volume of documents without redundant work.

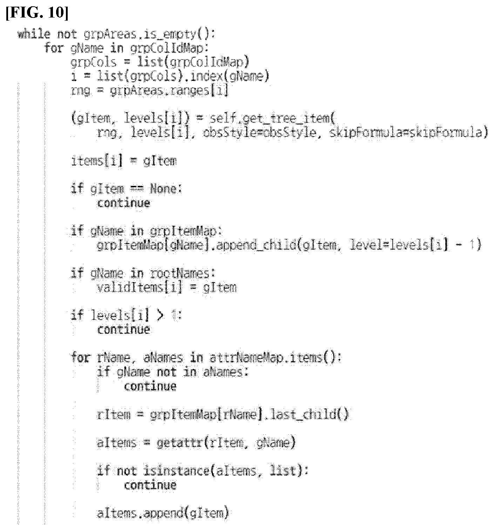

FIG. 10 is an example diagram of code that generates table of contents structure data to be used in a PowerPoint or Word document based on the table of contents organized in the Excel data of FIG. 6.

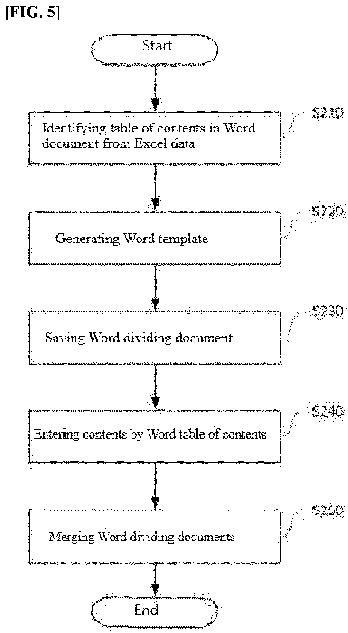

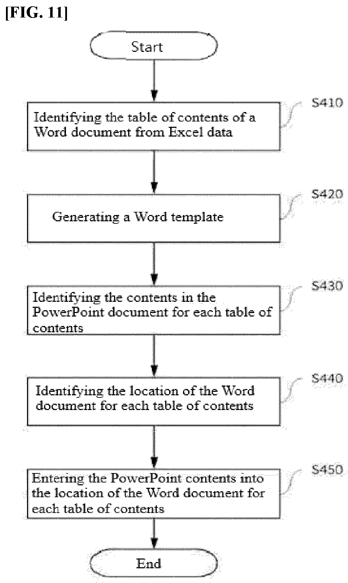

FIG. 11 is an example diagram illustrating the flow of transferring contents written by the user in the PowerPoint document of FIG. 4 into the Word document of FIG. 5 based on the table of contents organized in the Excel data of FIG. 6.

One embodiment of the invention comprises identifying the table of contents of a Word document from Excel data (S410); generating a Word template as described in FIG. 5 (S420); identifying the contents written by the user in the PowerPoint document for each table of contents item (S430); identifying the corresponding locations of those items in the Word document (S440); and entering the PowerPoint contents into the corresponding locations in the Word document (S450). The function caused by such a flow can be realized using a scripting language such as Visual Basic or Python that supports the Visual Basic library, which is supported in Microsoft's PowerPoint or Excel.

Meanwhile, the method for generating a PowerPoint document using Excel data according to the present invention can also be implemented as a computer-readable code on a computer-readable recording medium. The computer-readable recording medium includes all types of recording devices in which data that can be used by a computer system is stored.

For example, computer-readable recording media include ROM, RAM, CD-ROM, magnetic tape, hard disk, floppy disk, removable storage device, nonvolatile memory (flash memory), optical data storage device, etc., and also include media implemented in the form of carrier waves (e.g., transmission via the Internet).

Although a preferred embodiment of the method for creating a PowerPoint document using Excel data according to the present invention has been described, the present invention is not limited thereto, and various modifications may be made within the scope and sprit of the patent claims, the detailed description of the invention, and the attached drawings, which also falls under the scope of the present invention.

For example, the present invention is directed to PowerPoint documents, but is not limited thereto, and can also be implemented within the Microsoft Office family, which has a built-in Visual Basic and allows access the internal structure through the built-in Visual Basic, for example, using Excel data to create a Word document.

Using the automatic document conversion and editing program, if a user creates the desired content in a plurality of writing areas of a first form document, the second form document and the third form document can be automatically created. This allows users to continue using the first form document they frequently use, thereby making it easy to create documents of various forms.

In addition, in order to convert a first form document into a second form document and a third form document, a fourth form document can be converted into a first form document, and a table of contents can be extracted from a first form document and created as the table of contents of a second form document. In addition. the writing area of a first form document and the conversion area of a second form document can be modified, edited and saved, making it possible to generate a document in compatible with a new form. Since some content may not be automatically converted, the user can be informed of this and allowed to enter the content manually, ensuring that the conversion is completed without omission, and improving the reliability of the conversion.

### [Industrial Applicability]

According to the present invention, when a user generates the desired content in a plurality of writing areas of a first form document, the second form document and the third form document can be automatically generated, so that the users can utilize the first form document they frequently use, thereby easily generating e documents of various forms.

Also, in order to convert a first form document into a second form document and a third form document, the fourth form document can be converted into a first form document, and the table of contents from the first form document can be extracted and generated as the table of contents of the second form document.

## Claims

1. An automatic document conversion and editing program comprising the steps of:
providing a first form document having a plurality of writing areas for automatic document conversion;
creating a pre-conversion document for automatic document conversion through a user entering input into the plurality of writing areas in the first form document;
extracting a plurality of pieces of content including characters and pictures entered in the plurality of writing areas from the created pre-conversion document;
causing each of the extracted plurality of pieces of content to correspond to a plurality of form documents including a second form document and a third form document having a plurality of conversion areas provided in correspondence with the plurality of writing areas; and
creating a post-conversion document corresponding to the plurality of form documents by placing each of the extracted plurality of pieces of content into the corresponding conversion areas.

2. The automatic document conversion and editing program according to claim 1, further comprising:
grasping the plurality of writing areas in a fourth form document including the plurality of pieces of content;
extracting the plurality of pieces of content entered in the plurality of writing areas of the grasped fourth form document; and
creating a pre-conversion document by placing each of the extracted plurality of pieces of content into the corresponding writing areas of the first form document.

3. The automatic document conversion and editing program according to claim 1,
wherein the extracting the plurality of pieces of content comprises identifying the table of contents of the second form document in the first form document.

4. The automatic document conversion and editing program according to claim 1, further comprising: editing and saving the second form document corresponding to the first form document.

5. The automatic document conversion and editing program according to claim 1, comprising:
displaying the conversion areas in which the plurality of pieces of extracted content are not placed along with the corresponding contents, after creating a post-conversion document, and manually entering the corresponding contents into the conversion area where the extracted content have not been placed.
